# EUROPEAN PATENT APPLICATION

(11) **EP 2 768 044 A1**
(43) Date of publication of application: **20.08.2014**
(21) Application number: 14155295.0
(22) Date of filing: 14.02.2014
(51) Int. Cl.: H01M 2/04, H01M 2/34, H01M 10/04

(54) **Battery pack**

(30) Priority: 15.02.2013 KR 20130016450
(71) Applicant: Samsung SDI Co., Ltd., Yongin-si, Gyeonggi-do (KR)
(72) Inventor: Lee, Sang-Joo, Gyeonggi-do (KR)
(74) Representative: Mounteney, Simon James

(57) **Abstract**

A battery pack includes a bare cell; an insulation member mounted on one surface of the bare cell; and an upper case covering the one surface of the bare cell, and having at least one coupling portion for coupling between the upper case and the bare cell. In the battery pack, the coupling portion includes an avoidance portion (e.g., a notch) for avoiding contact between the coupling portion and the insulation member. Accordingly, it is possible to reduce an assembly error of the battery pack by avoiding interference caused by the insulation member when the upper case is coupled to the bare cell.

## Description

### BACKGROUND

### 1. Field

An aspect of the present invention relates to a battery pack.

### 2. Description of the Related Art

Recently, battery packs have been variously used as power sources of portable electronic devices. As the portable electronic devices are used in various fields, demands on battery packs are rapidly increasing. The battery packs have recently employed rechargeable secondary batteries, in consideration of economic aspects.

Such a secondary battery is manufactured by electrically connecting a bare cell and a protective circuit board or module. Here, the bare cell is formed by sealing a can in which an electrode assembly and an electrolyte are accommodated. The protective circuit board or module protects the bare cell by preventing overcharging and overdischarging while controlling charging/discharging of the bare cell.

The secondary battery is further provided with a protection element acting as an auxiliary protection element of the bare cell. The protection element performs a function of cutting off the flow of current if sensing a sudden change in temperature and voltage of the bare cell. The protection element is mounted on a top surface of the bare cell so as to easily sense a change in temperature or voltage of the bare cell. In this case, the protection element has an insulation member so as to be electrically insulated from the bare cell. The protective circuit board or module is mounted in an upper case, and the upper case is coupled to the bare cell.

The battery pack configured as described above often experiences an assembly error such as a coupling failure caused by the insulation member when the upper case is coupled to the bare cell.

### SUMMARY

Aspects of embodiments of the present invention are directed toward a battery pack capable of reducing an assembly error that may be caused by an insulation member when a bare cell and an upper case are coupled to each other.

Aspects of embodimetns of the present invention are directed toward a battery pack capable of improving assembling efficiency.

According to an embodiment of the present invention, a battery pack includes: a bare cell; an insulation member mounted on one surface of the bare cell; and an upper case covering the one surface of the bare cell, and having at least one coupling portion for coupling between the upper case and the bare cell, wherein the coupling portion has an avoidance portion (e.g., a notch) for avoiding contact between the coupling portion and the insulation member.

The avoidance portion may be formed in an adjacent region to the insulation member on one surface of the coupling portion and contacting a top surface of the bare cell.

The avoidance portion may be formed so that the adjacent region is spaced apart from the top surface of the bare cell.

The avoidance portion may be formed so that the adjacent region has a step difference with the top surface of the bare cell and/or the insulation member.

The height of the avoidance portion may be greater than or equal to the thickness of the insulation member.

The height of the avoidance portion may be 0.4 to 0.6mm.

The coupling portion may include a screw hole, and the top surface of the bare cell may include at least one coupling groove corresponding to the screw.

The length of the avoidance portion may be less than 20% of the length of the one surface of the coupling portion.

An opening portion of the screw hole may include a mounting portion having a diameter greater than that of the screw hole.

The bare cell may include a protection element that may be mounted on the insulation member.

The protection element may be a positive temperature coefficient (PTC) element, a thermal fuse element, or a component having an equivalent function thereof.

The battery module may further include a protective circuit board or module disposed (or located) between the protection element and the upper case, and electrically connected to the bare cell and the protection element.

A side surface of the upper case may include a cut-away portion for avoiding contact between the upper case and the insulation member.

According to embodiments of the present invention, it is possible to reduce an assembly error of the battery pack by avoiding interference caused by the insulation member when the upper case is coupled to the bare cell.

At least some of the above and other features of the invention are set out in the claims.

### BRIEF DESCRIPTION OF THE DRAWINGS

The accompanying drawings, together with the specification, illustrate embodiments of the present invention, and, together with the description, serve to explain the principles of the present invention.
FIG. 1A is an exploded perspective view of a battery pack according to an embodiment of the present invention.
FIG. 1 B is an assembled perspective view of the battery pack shown in FIG. 1 A.
FIG. 1C is a partial sectional view taken along line I-I of the battery pack shown in FIG. 1 B.
FIG. 2 is an enlarged sectional view of region A shown in FIG. 1C.
FIG. 3 is an enlarged sectional view showing a state in which no avoidance portion (e.g., no notch) exists in the region A shown in FIG. 1C.
FIG. 4 is an exploded perspective view of a battery pack according to another embodiment of the present invention.
FIG. 5 is a partial cut-away perspective view of an upper case according to the embodiment shown in FIG. 4.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature, and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

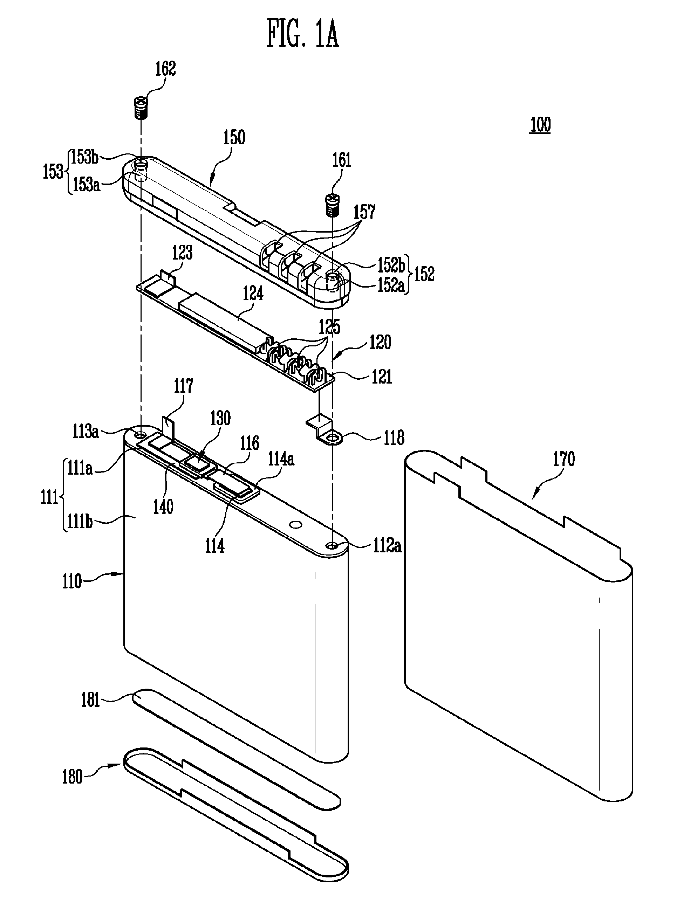

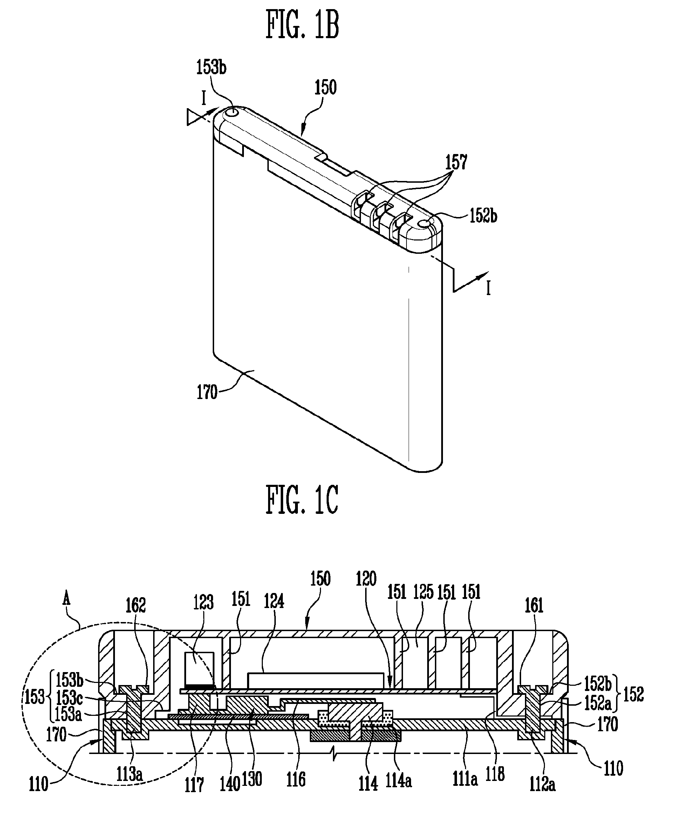

FIG. 1A is an exploded perspective view of a battery pack according to an embodiment of the present invention. FIG. 1 B is an assembled perspective view of the battery pack shown in FIG. 1A. FIG. 1C is a partial sectional view taken along line I-I of the battery pack shown in FIG. 1 B.

The battery pack 100 according to this embodiment includes a bare cell 110, a protective circuit board or module 120 (hereinafter "protective circuit board"), a protection element 130, an insulation member 140, and an upper case 150.

In one embodiment, the bare cell 110 is a can-type battery manufactured by sealing an electrode assembly with a sealing assembly 111 made of a metal material such as aluminum. In one embodiment, the electrode assembly is formed by winding a positive electrode plate, a negative electrode plate and a separator. The sealing assembly 111 may include a can (e.g., a metal can) 111 b having one open end portion and a cap plate 111 a covering the open end portion (e.g., an opening) of the can 111 b. In one embodiment, the can 111 b is metal. First and second coupling grooves 112a and 113a are respectively formed at each the left and right upper end portions of the cap plate 111 a. An electrode terminal 114 may be mounted at either the can 111 b or the center of the cap plate 111 a so as to be insulated by an insulator 114a. In FIGS. 1 A and 1C, the electrode terminal 114 is inserted into the cap plate 111 a so as to be insulated by the insulator 114a. In this embodiment, a positive electrode of the bare cell 110 may be electrically connected to the cap plate 111a, and a negative electrode of the bare cell 110 may be electrically connected to the electrode terminal 114. The polarities of the positive and negative electrodes respectively connected to the cap plate 111 a and the electrode terminal 114 may be changed.

The first and second coupling grooves 112a and 113a are formed at respective upper side portions of the bare cell 110. In one embodiment, a first screw 161 is coupled to the first coupling groove 112a, and a second screw 162 is coupled to the second coupling groove 113a. A screw thread may be formed on the inner circumferential surface of the first or second coupling groove 112a or 113a by the first or second screw 161 or 162.

The protective circuit board 120 is electrically connected to the bare cell 110. In one embodiment, a negative electrode of the protective circuit board 120 is connected to the electrode terminal 114 that is the negative electrode of the bare cell 110 by a first lead tab 116. In one embodiment, a positive electrode of the protective circuit board 120 may be connected to the cap plate 111 a that is the positive electrode of the bare cell 110 by a lead plate 118.

The protective circuit board 120 includes an insulation substrate 121, a printed circuit pattern, a conductive pad 123, a protective circuit portion 124 and a charging/discharging terminal 125. The conductive pad 123, the protective circuit portion 124, and the charging/discharging terminal 125 may be soldered to the printed circuit pattern formed on the insulation substrate 121.

In one embodiment, a passive element such as a resistor or capacitor, an active element such as a field effect transistor (FET), a safety element such as a positive temperature coefficient (PTC) element, and an integrated circuit (IC) are selectively formed in the protective circuit portion 124. The conductive pad 123 is connected to a second lead tab 117. The second lead tab 117 is connected to the first lead tab 116, which is connected to the electrode terminal 114.

In one embodiment, the protective circuit portion 124 charges or discharges the bare cell 110 during the charging/discharging of the bare cell 110, and cuts off the charging/discharging path of the bare cell 110 in overheat or overcurrent of the bare cell 110, thereby preventing the lifetime degradation, overheat, and/or explosion of the bare cell 110. In one embodiment, the charging/discharging terminal 125 becomes a passage through which current flows to the inside/outside of a battery by charging/discharging of a battery.

The protection element 130 is electrically connected between the negative electrode of the protective circuit board 120 and the electrode terminal 114. In one embodiment, the protection element 130 cuts off the electrical connection between the bare cell 110 and the protective circuit board 120 in the occurrence of an excessive increase in the temperature of the bare cell 110 or of current. Any one of a positive temperature coefficient (PTC) element, a thermal fuse, or a component having an equivalent function thereof, may be selectively used as the protection element 130.

The insulation member 140 is attached to a top surface of the bare cell 110. The protection element 130 is positioned on a top surface of the insulation member 140. Thus, the bare cell 110 and the protection element 130 are insulated from each other by the insulation member 140. In one embodiment, he insulation member 140 is a tape made of an insulative material, but the present invention is not limited thereto.

The upper case 150 is coupled to an upper portion of the bare cell 110 in a state in which the protective circuit board 120 is accommodated inside the upper case 150. The protective circuit board 120 is protected from external contact and impact by the upper case 150. First and second coupling portions 152 and 153 for coupling the upper case 150 to the bare cell 110 are formed at both left and right ends of the upper case 150, respectively.

First and second screw holes 152a and 153a passing through centers of the first and second coupling portions 152 and 153, respectively, are formed in each of the first and second coupling portions 152 and 153. Mounting portions 152b and 153b having diameters greater than those of the first and second screw holes 152a and 153a are formed in opening portions of the first and second screw holes 152a and 153a, respectively. Thus, in one embodiment, head portions of the first and second screws 161 and 162 are mounted on the mounting portions 152b and 153b, respectively; and body portions of the first and second screws 161 and 162 are respectively inserted into the first and second screw holes 152a and 153a so as to be coupled to the first and second coupling grooves 112a and 113a of the bare cell 110, respectively. That is, in this embodiment, the first and second screws 161 and 162 allow the upper case 150 to be fixed to the bare cell 110 and the protective circuit board 120.

The lead plate 118, supporting between the protective circuit board 120 and the bare cell 110, and electrically connecting the protective circuit board 120 and the cap plate 111a to each other, is disposed (or located) between the first coupling portion 152 and the first coupling groove 112a. The lead plate 118 may be coupled together with the first coupling portion 152 and the first coupling groove 112a by the first screw 161.

In one embodiment, an avoidance portion (e.g., a notch) 153c for avoiding contact between the second coupling portion 153 and the insulation member 140 is formed in one region of the second coupling portion 153 contacting the top surface of the bare cell 110. The avoidance portion 153c will be described in further detail below.

The upper case 150 may be a plastic case formed by injection-molding a resin material such as poly carbonate. The upper case 150 protects the protective circuit board 120 from external impact, and prevents a short circuit of the protective circuit board 120.

The upper case 150 has a charging/discharging terminal hole 157 formed therein. In one embodiment, the charging/discharging terminal 125 is exposed to the outside of the upper case 150 by the charging/discharging terminal hole 157 formed in the upper case 150.

A plurality of ribs 151 are formed inside the upper case 150. In one embodiment, the plurality of ribs 151 support the top surface of the protective circuit board 120 so as to enable the protective circuit board 120 to be adhered closely to the bare cell 110.

In one embodiment, a label 170 surrounds the bare cell 110 and the upper case 150. In one embodiment, the label 170 may be adhered to the bare cell 110 and the upper case 150 by an adhesive. Information such as the capacity and product number of the battery pack 100 may be printed on an outer surface of the label 170.

In one embodiment, an auxiliary case 180 surrounds corner portions of the bare cell 110 so as to prevent the corner portions of the bare cell 110 from being distorted when the bare cell 110 receives impact from the outside thereof. In one embodiment, a double-sided adhesive tape 181 is adhered between the auxiliary case 180 and the bare cell 110 to allow the auxiliary case 180 to be coupled to the bare cell 110 therethrough. In one embodiment, the outer surface of the auxiliary case 180 is surrounded by the label 170, thereby improving the coupling between the auxiliary case 180 and the bare cell 110.

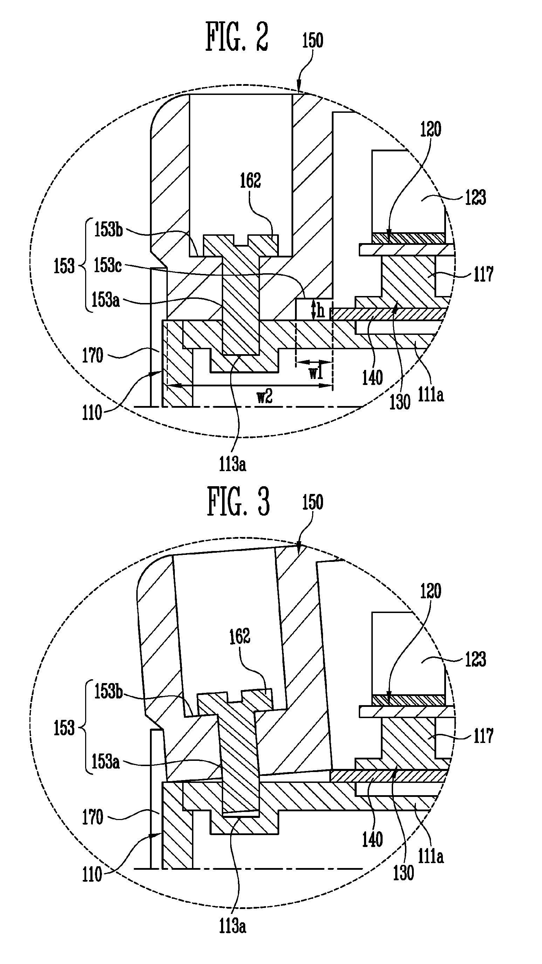

FIG. 2 is an enlarged sectional view of region A shown in FIG. 1C. FIG. 3 is an enlarged sectional view showing a state in which no avoidance portion (e.g., no notch) exists in the region A shown in FIG. 1C.

Referring to FIG. 2, the avoidance portion 153c for avoiding contact between the second coupling portion 153 and the insulation member 140 is formed at one portion of the second coupling portion 153 to avoid a worker's mistake during assembly.

When the insulation member 140 is attached to the top surface of the bare cell 110 in an assembling process of the battery pack 100, the insulation member 140 may be attached to the region in which the second coupling portion 153 and the top surface of the bare cell 110 are to contact each other. For example, in a case where the insulation member 140 is attached to the region in which the second coupling portion 153 and the top surface of the bare cell 110 are to contact each other as shown in FIG. 3, the second coupling portion 153 having no avoidance portion formed at the one portion of the second coupling portion 153 thereof might not be adhered closely to the top surface of the bare cell 110 due to the insulation member 140. In this case, when coupled to the second coupling groove 113a, the second screw 162 coulde run idle or may be broken. A space could form between the second coupling groove 113a and the top surface of the bare cell 110, and therefore, a coupling error between the upper case 150 and the bare cell 110 may occur.

Accordingly, in this embodiment, as shown in FIG. 2, the avoidance portion 153c is formed in a region adjacent to the insulation member 140 on one surface of the second coupling portion 153 contacting the top surface of the bare cell 110. The avoidance portion 153c is formed so that the adjacent region is spaced apart from the top surface of the bare cell 110.

The avoidance portion 153c is formed to have a step difference with the top surface of the bare cell 110 and/or the insulation member 140. The step difference may be formed by partially cutting away the region adjacent to the insulation member 140 on the one surface of the second coupling portion 153.

In one embodiment, the height h of the avoidance portion 153c is greater than or identical to a thickness of the insulation member 140 in order to avoid interference between the second coupling portion 153 and the insulation member 140. In one embodiment, the height of the avoidance portion 153c is about 0.4 to 0.6mm.

In one embodiment, the length w1 of the avoidance portion 153c is less than 20% of the length w2 of the one surface of the second coupling portion 153. In one embodiment where the length w1 of the avoidance portion 153c is widened by 20% or more of the length w2, the region in which the second coupling portion 153 and the top surface of the bare cell 110 contact each other is narrowed, and therefore, the coupling between the upper case 150 and the bare cell 110 is weakened.

Thus, it may be possible to avoid the interference that may occur between the second coupling portion 153 and the insulation member 140 when the insulation member 140 is attached to the portion at which the second coupling portion 153 and the top surface of the bare cell 110 contact each other, beyond the region in which the insulation member 140 was to be originally attached, when the avoidance portion 153c is formed in the second coupling portion 153 as described above.

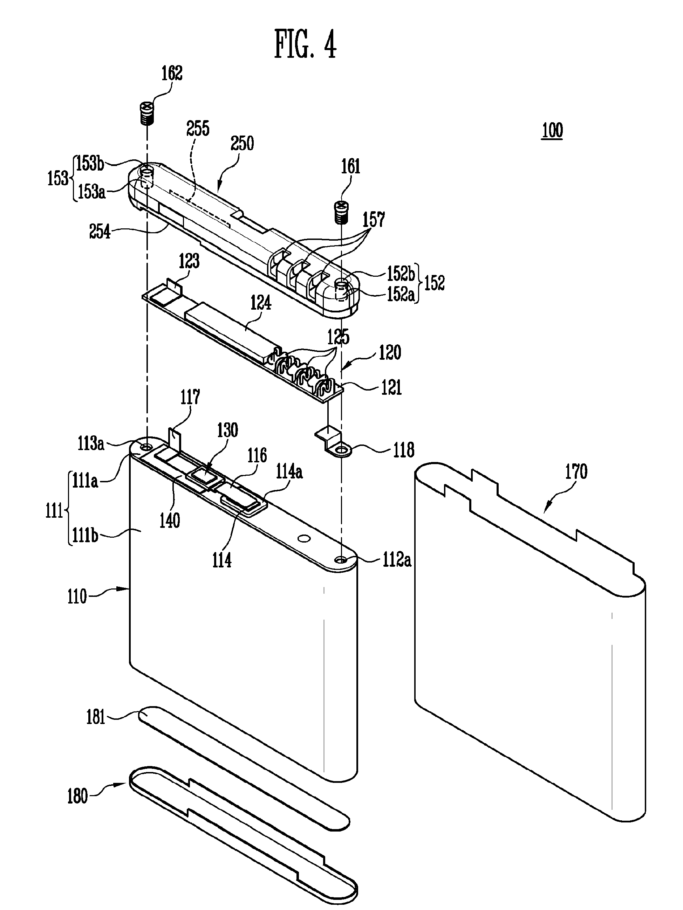

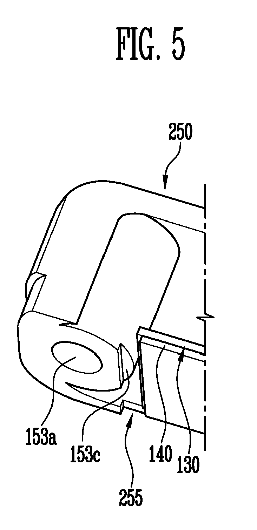

FIG. 4 is an exploded perspective view of a battery pack according to another embodiment of the present invention. FIG. 5 is a partial cut-away perspective view of an upper case according to the embodiment shown in FIG. 4.

Referring to FIGS. 4 and 5, the battery pack 100 according to this embodiment includes a bare cell 110, a protective circuit board 120, a protection element 130, an insulation member 140, and an upper case 250.

This embodiment has the same configuration as the aforementioned embodiments shown in FIGS. 1 to 3, except the configuration of the upper case 250. Therefore, components identical to those of the aforementioned embodiments are designated by like reference numeral, and their detailed descriptions will be omitted.

When the insulation member 140 is attached to the top surface of the bare cell 110 in an assembling process of the battery pack 100 as shown in FIG. 4, the insulation member 140 may be attached to the region in which a side part of the upper case 250 and the top part of the bare cell 110 contact each other due to a worker's mistake. In this embodiment, the side surface of the upper case 250 might not come in contact with the top surface of the bare cell 110 due to the insulation member 140 when the upper case 250 and the bare cell 110 are coupled to each other.

In this embodiment, cut-away portions 254 and 255, for avoiding contact of the upper case 250 with the insulation member 140, are formed in respective side portions of the upper case 250. In this case, the cut-away portions 254 and 255 are formed corresponding to the position at which the insulation member 140 is attached to the upper case 250.

While the present invention has been described in connection with certain embodiments of the invention, it is to be understood that the invention is not limited to the disclosed embodiments, but, on the contrary, is intended to cover various modifications and equivalent arrangements included within the scope of the appended claims, and equivalents thereof.

## Claims

1. A battery pack, comprising:
a bare cell;
an insulation member mounted on one surface of the bare cell; and
an upper case covering the one surface of the bare cell, and having at least one coupling portion for coupling between the upper case and the bare cell,
wherein the coupling portion comprises an avoidance portion for avoiding contact between the coupling portion and the insulation member.

2. A battery pack according to claim 1, wherein the avoidance portion is located in an adjacent region of the coupling portion that is adjacent the insulation member and situated on one surface of the coupling portion.

3. A battery pack according to claim 2, wherein the avoidance portion is configured so that the adjacent region is spaced apart from the top surface of the bare cell.

4. A battery pack according to claim 3, wherein the avoidance portion is configured so that the adjacent region has a step difference with respect to the top surface of the bare cell and/or the insulation member.

5. A battery pack according to any preceding claim, wherein a height of the avoidance portion is greater than or equal to a thickness of the insulation member.

6. A battery pack according to any preceding claim, wherein a height of the avoidance portion is from 0.4 to 0.6mm.

7. A battery pack according to any preceding claim, wherein a length of the avoidance portion is less than 20% of a length of the one surface of the coupling portion.

8. A battery pack according to any preceding claim, wherein the coupling portion has a screw hole, the one surface of the bare cell is a top surface of the bare cell, and the top surface of the bare cell has at least one coupling groove corresponding to the screw hole.

9. A battery pack according to claim 8, wherein an opening portion of the screw hole comprises a mounting portion having a diameter greater than that of the remainder of the screw hole.

10. A battery pack according to any preceding claim, wherein the bare cell comprises a protection element that is mounted on the insulation member.

11. A battery pack according to claim 10, wherein the protection element comprises a positive temperature coefficient (PTC) element, a thermal fuse element, or a component having an equivalent function thereof.

12. A battery pack according to claim 10 or 11, further comprising a protective circuit module between the protection element and the upper case, wherein the protective circuit module is electrically connected to the bare cell and the protection element.

13. A battery pack according to any preceding claim, wherein a side portion of the upper case comprises a cut-away portion for avoiding contact between the upper case and the insulation member.
